# EUROPEAN PATENT SPECIFICATION

(11) **EP 0 748 015 B1**
(45) Date of publication and mention of the grant of the patent: **13.10.1999**
(21) Application number: 96108091.8
(22) Date of filing: 21.05.1996
(51) Int. Cl.: H02B 1/38, E05F 5/00, E05F 1/12

(54) **Faceplate for electrical master boxes with openable flap**
Frontplatte für elektrische Hauptverteilerkaste mit öffnender Deckel
Plaque frontale pour boîtier de distribution principale électrique avec couvercle ouvrable

(30) Priority: 08.06.1995 IT MI950410 U
(43) Date of publication of application: 11.12.1996
(73) Proprietor: GEWISS S.p.A., I-24069 Cenate Sotto (Bergamo) (IT)
(72) Inventor: Bosatelli, Domenico, 24069 Cenate Sotto (Prov. of Bergamo) (IT)
(74) Representative: Modiano, Guido, Dr.-Ing.

(56) References cited:
- EP-A- 0 246 155
- DE-A- 1 690 079
- GB-A- 2 062 933

## Description

The present invention relates to a faceplate for electrical master boxes with openable flap.

It is known that the faceplates normally used for electrical master boxes in which, for example, automatic switches, differential circuit breakers, and other electrical components are grouped together, are often provided with a covering flap that is pivoted to the faceplate.

Currently available flaps are usually opened manually by acting in appropriately provided protruding regions or with other elements that allow to provide a hold for opening.

With all solutions, although opening the flap is an extremely common operation, in many cases it is not an easy one, and therefore the risk arises of damaging the flap due to incorrect actuations.

A principal aim of the invention is to solve the above problem by providing a faceplate for electrical master boxes with an openable flap that allows to open the flap in a fully automatic manner with an extremely easy and quick actuation.

Within the scope of this aim, a particular object of the invention is to provide a faceplate in which the flap opens gradually without causing undue impacts or snap actions.

Another object of the present invention is to provide a faceplate which by virtue of its particular constructive characteristics is capable of giving the greatest assurances of reliability and safety in use.

Another object of the present invention is to provide a faceplate for electrical master boxes that can be easily obtained starting from commonly commercially available elements and materials and is furthermore competitive from a merely economical point of view.

This aim, these objects, and others which will become apparent hereinafter are achieved by a faceplate for electrical master boxes with openable flap, according to the invention, comprising a frame that can be coupled to a supporting box for electrical components and having a cover that can be overturned and can be arranged in the region affected by said electrical components, characterized in that it comprises elastic means for overturning said cover to open it, as well as friction means adapted to slow down the opening rotation of said cover.

Further advantages of the invention will become apparent from the following detailed description of a faceplate for electrical master boxes, with openable flap, illustrated only by way of non-limitative example in the accompanying drawings, wherein:
figure 1 is a schematic perspective view of the faceplate according to the invention, with the cover in open position;
figure 2 is a front view of the faceplate, with the cover in closed position;
figure 3 is a sectional view, taken along a plane III-III of figure 2;
figure 4 is a sectional view, taken at the plane IV-IV of figure 2;
figures 5 and 6 are sectional views, taken along the plane V-V of figure 2, in the open position and in the closed position respectively;
figure 7 is a cutout view of the detail of the pivoting of the cover to the faceplate frame, in the region where the elastic means act;
figure 8 is a schematic sectional view, taken along the plane VIII-VIII of figure 2;
figure 9 is a view of the opening button, seen from the rear face;
figure 10 is a view of means for detachably retaining the cover in the closed position.

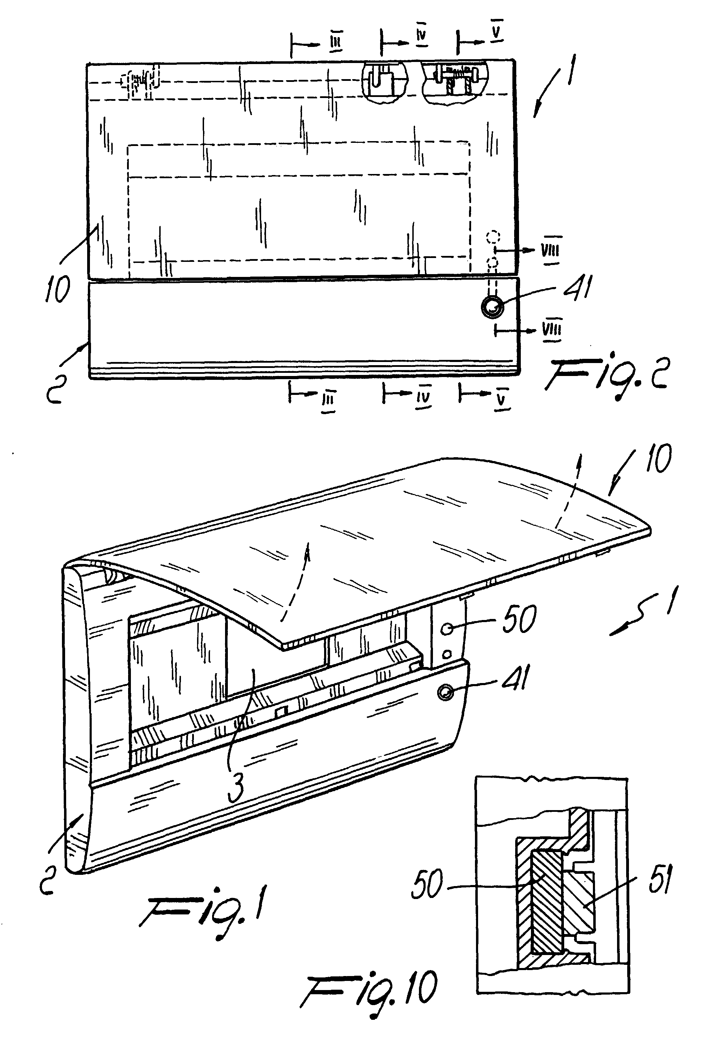

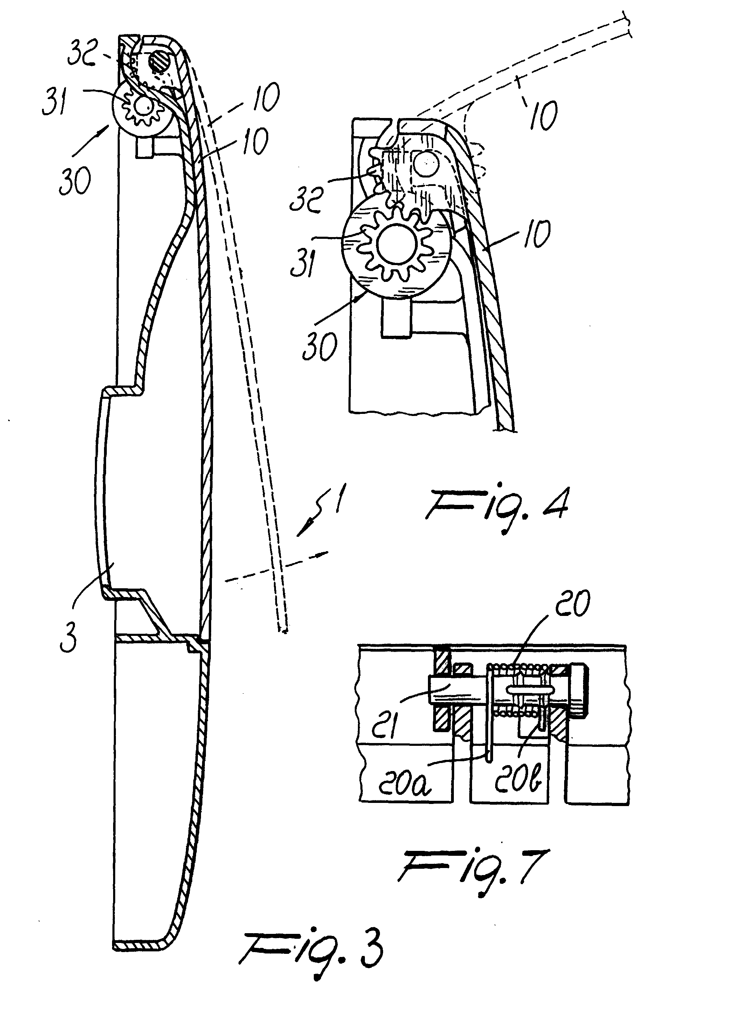

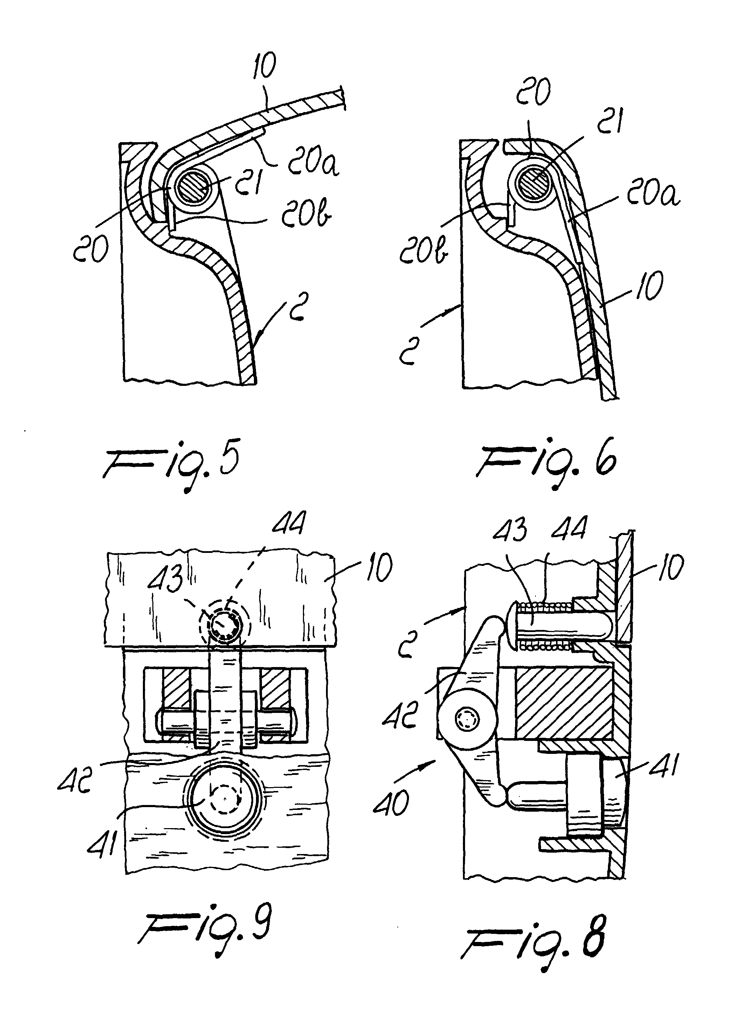

With reference to the above figures, the faceplate for electrical master boxes with openable flap, according to the invention, which is generally designated by the reference numeral 1, comprises a frame 2 that can be coupled in a known manner to a box for electrical components and has a region 3 for accommodating the various electrical components, which can be constituted by differential circuit breakers, magnetothermal circuit breakers, other signalling elements, or other electrical componentry.

The region 3 is closed by a cover 10 that is pivoted to the frame 2 so that it is available in a closure position, in which it substantially conceals the region affected by the various electrical components, and in an open position, in which it allows access to said components.

The particularity of the invention is constituted by the fact that means are provided which allow to automatically open the cover 10.

Said means are constituted by at least one coiled spring 20 that is wound around the pivot 21 that allows the mutual pivoting of the cover 10 and of the frame 2 and has one end 20a that acts against the cover 10 and another end 20b that acts against the frame 2.

In order to achieve gradual opening, there are provided friction means, generally designated by the reference numeral 30, which have a first gear 31 that meshes with a circular rack-like portion 32 that is rigidly coupled to the cover 10 and is centered on the rotation axis of the cover 10.

The friction device 30, which is a per se known component, has a disk-like element that rotates rigidly with the gear 31 and moves in a bath of oil or of another highly dense liquid.

The faceplate furthermore comprises an opening element, generally designated by the reference numeral 40, which is constituted by a button 41 that can be accessed on the faceplate and acts on a rocker lever 42 which pushes, at the other end, a pusher pin 43 that is elastically contrasted by a return spring 44 that engages one end of the flap 10 that is opposite to the pivoting end so as to space it in such a manner as to overcome the action that keeps the flap closed, which can be provided by virtue of elastic teeth or by means of a permanent magnet 50 that is accommodated in the faceplate and engages a ferromagnetic part 51 that is connected to the cover 10.

With the described arrangement, during closure of the cover, in practice the coiled spring 20 is loaded and the cover 10 remains closed due to the action of the retention means.

When one wishes to open the cover 10, it is sufficient to act on the button 41 which, by virtue of the above-described kinematic system, produces a first spacing of the cover from the faceplate, with consequent automatic opening produced by the coiled spring 20, which opens the cover 10 with a gradual movement due to the braking action applied by the friction means 30.

From the above description, it is thus evident that the invention achieves the intended aim and objects, and in particular the fact is stressed that a faceplate is provided in which cover opening is achieved automatically, in a gradual and uniform manner.

In practice, the materials employed, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A faceplate (1) for electrical master boxes with openable flap, comprising a frame (2) that can be coupled to a supporting box for electrical components and having a cover (10) that can be overturned and can be arranged in the region (3) affected by said electrical components, characterized in that it comprises elastic means (20) for overturning said cover (10) to open it, as well as friction means (30) that are adapted to slow down the opening rotation of said cover.

2. A faceplate (1) according to claim 1, characterized in that said elastic means (20) are constituted by a coiled spring (20) that is associated with the pivot (21) for pivoting said cover (10) to said faceplate (1) and has ends (20a, 20b) acting against said cover (10) and said frame (2) respectively.

3. A faceplate according to claim 2, characterized in that said friction means (30) are constituted by a gear (31) that rotates rigidly with a disk-like element that is movable inside a chamber with a high-density liquid, a portion of a circular rack (32), formed by said cover (10) and having an axis lying on the pivoting axis of said cover (10), meshing with said gear.

4. A faceplate (1) according to claim 1, characterized in that it comprises means for actuating the opening of said cover (10) that are constituted by a button (41) adapted to interact with a pusher pin (43) that can engage the internal end of said cover (10) that is located at the pivoting edge.

5. A faceplate (1) according to claim 1, characterized in that it comprises means for detachably retaining said cover (10) in closed position.

6. A faceplate (1) according to claim 5, characterized in that said means for detachably retaining the cover (10) in closed position are constituted by elastic teeth acting between said cover (10) and said frame (2).

7. A faceplate (1) according to one or more of the preceding claims, characterized in that said means for detachably retaining the cover (10) in closed position are constituted by a permanent magnet (50) that is associated with said frame (2) and acts on a ferromagnetic element (51) associated with said cover (10).

## Patentansprüche

1. Frontplatte (1) für elektrische Hauptverteilkästen mit öffenbarem Deckel, mit einem Rahmen (2), der an einen Tragkasten für elektrische Komponenten gekuppelt werden kann und der eine Abdeckung (10) aufweist, die übergekippt und in dem Bereich (3) angeordnet werden kann, der von den elektrischen Komponenten beeinflußt wird,
dadurch gekennzeichnet,
daß diese elastische Mittel (20) zum Überkippen der Abdeckung (10), um diese zu öffnen, sowie Reibmittel (30) aufweist, die angepaßt sind, um die Öffnungsdrehbewegung der Abdeckung zu verlangsamen.

2. Frontplatte (1) nach Anspruch 1,
dadurch gekennzeichnet,
daß die elastischen Mittel (20) von einer Spiralfeder (20) gebildet sind, die mit einem Drehzapfen (21) zur drehbaren Lagerung der Abdeckung (10) gegenüber der Frontplatte (1) verbunden ist und Enden (20a,20b) aufweist, die gegen die Abdeckung (10) bzw. den Rahmen (2) wirken.

3. Frontplatte (1) nach Anspruch 2,
dadurch gekennzeichnet,
daß die Reibmittel (30) von einem Zahnrad (31) gebildet sind, das fest mit einem scheibenartigen Element dreht, das innerhalb einer Kammer mit einem Fluid hoher Dichte bewegbar ist, wobei ein Bereich eines kreisförmigen Gestells (32), welches von der Abdeckung (10) gebildet ist und eine Achse aufweist, die auf der Schwenkachse der Abdeckung (10) liegt, mit dem Zahnrad kämmt.

4. Frontplatte (1) nach Anspruch 1,
dadurch gekennzeichnet,
daß diese Mittel zur Ausführung der Öffnung der Abdeckung (10) aufweist, welche von einem Knopf (41) gebildet sind, der angepaßt ist, um mit einem Druckstift (43) zusammenzuwirken, welcher in das innere Ende der Abdeckung (10) eingreifen kann, das an der Schwenkkante angeordnet ist.

5. Fronplatte (1) nach Anspruch 1,
dadurch gekennzeichnet,
daß diese Mittel zum abnehmbaren Halten der Abdeckung (10) in geschlossener Position aufweist.

6. Frontplatte (1) nach Anspruch 5,
dadurch gekennzeichnet,
daß die Mittel zum abnehmbaren Halten der Abdeckung (10) in geschlossener Position von einem elastischen Zahn gebildet sind, der zwischen der Abdeckung (10) und dem Rahmen (2) wirkt.

7. Fronplatte (1) nach einem oder mehreren der vorangehenden Ansprüche,
dadurch gekennzeichnet,
daß die Mittel zum abnehmbaren Halten der Abdeckung (10) in geschlossener Position von einem Permanentmagneten (50) gebildet sind, der mit dem Rahmen (2) verbunden ist und auf ein ferromagnetisches Element (51) wirkt, das mit der Abdeckung (10) verbunden ist.

## Revendications

1. Une plaque frontale (1) pour des boîtiers principaux de distribution électrique munis d'un volet ouvrant, comprenant un cadre (2) qui peut être couplé à une boîte de support pour des composants électriques et qui présente un couvercle (10) que l'on peut faire tourner et qui peut venir se placer dans la zone (3) qui est affectée par lesdits composants électriques, caractérisée en ce qu'elle comporte des moyens élastiques (20) pour faire tourner ledit couvercle (10) afin de l'ouvrir, ainsi que des moyens de friction (30) qui sont aptes à ralentir la rotation d'ouverture dudit couvercle.

2. Une plaque frontale (1) selon la revendication 1, caractérisée en ce que lesdits moyens élastiques (20) sont constitués par un ressort enroulé (de torsion) (20) qui est associé au pivot (21) pour faire pivoter ledit couvercle (10) vers ladite plaque frontale (1) et qui comporte des extrémités (20a, 20b) agissant à l'encontre, respectivement dudit couvercle (10) et dudit cadre (2).

3. Une plaque frontale selon la revendication 2 caractérisée en ce que lesdits moyens de friction (30) sont constitués par une roue d'engrenage (31) qui tourne rigidement avec un élément en forme de disque qui est mobile à l'intérieur d'une chambre remplie d'un liquide de densité élevée, une partie d'une crémaillère circulaire (32) qui est formée par ledit couvercle (10) qui présente un axe situé sur l'axe de pivotement dudit couvercle (10), et qui engrène avec ladite roue d'engrenage.

4. Une plaque frontale (1) selon la revendication 1, caractérisée en ce qu'elle comporte des moyens pour provoquer l'ouverture dudit couvercle (10) et qui sont constitués par un bouton poussoir (41) apte à coopérer avec une broche de poussoir (43) qui peut venir en contact avec l'extrémité interne dudit couvercle (10) qui est située sur le bord de pivotement.

5. Une plaque frontale (1) selon la revendication 1, caractérisée en ce qu'elle comporte des moyens pour retenir de façon amovible ledit couvercle (10) en position fermée.

6. Une plaque frontale (1) selon la revendication 5, caractérisée en ce que lesdits moyens pour retenir de façon amovible le couvercle (10) en position fermée sont constitués par des dents élastiques agissant entre ledit couvercle (10) et ledit cadre (2).

7. Une plaque frontale (1) selon l'une ou plusieurs des revendications précédentes, caractérisée en ce que lesdits moyens pour retenir de façon amovible le couvercle (10) en position fermée sont constitués par un aimant permanent (50) qui est associé audit cadre et qui agit sur un élément ferromagnétique (51) associé audit couvercle (10).
